(19) Europäisches Patentamt
European Patent Office
Office européen des brevets

(11) **EP 2 910 896 B1**

(12) **EUROPEAN PATENT SPECIFICATION**

(45) Date of publication and mention of the grant of the patent:
**08.04.2020 Bulletin 2020/15**

(21) Application number: **13847867.2**

(22) Date of filing: **30.09.2013**

(51) Int Cl.:
*G01C 17/34* (2006.01)     *G01S 3/782* (2006.01)
*G01S 19/53* (2010.01)     *H01Q 1/12* (2006.01)
*H01Q 1/24* (2006.01)

(86) International application number:
**PCT/CN2013/084719**

(87) International publication number:
**WO 2014/059881 (24.04.2014 Gazette 2014/17)**

(54) **ANTENNA ATTITUDE MEASUREMENT METHOD**

VERFAHREN ZUR MESSUNG DER LAGE EINER ANTENNE

PROCÉDÉ DE MESURE D'ATTITUDE D'UNE ANTENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2012 CN 201210396600**

(43) Date of publication of application:
**26.08.2015 Bulletin 2015/35**

(73) Proprietor: **Bi, Shijie**
**Beijing 100076 (CN)**

(72) Inventor: **Bi, Shijie**
**Beijing 100076 (CN)**

(74) Representative: **Klein, Thomas**
**Mainzer Strasse 18e**
**55263 Ingelheim (DE)**

(56) References cited:
**EP-A2- 2 498 050      CN-A- 102 032 893**
**CN-A- 102 401 645      CN-A- 102 401 645**
**CN-A- 102 901 484      CN-B- 101 373 137**
**CN-U- 201 983 783      CN-U- 202 255 354**
**JP-A- 2012 088 073      KR-A- 20100 010 233**
**US-A1- 2003 058 161      US-A1- 2009 040 106**
**US-A1- 2011 275 408**

## Description

### Technical field

The present invention relates to the technical field of communication, in particular to a sensor for detecting an antenna attitude in a communication network and an antenna attitude detection method.

### Background

Along with the rapid development of communication technologies, network scale of domestic wireless communication operators and the number of users are increased faster. With the intensification of market competition, mobile communication network quality, as a power guarantee for further developing users and lowering the churn-rate of users, has become a key factor for competition between operators. Influencing factors of the mobile communication network quality can be divided into three major classes: network planning reasonability, performance quality of network equipment and project quality of site construction. Among the three factors, project parameter data of a base station antenna is the most basic element, the measurement of the project parameter data is the most basic work in production operation such as construction, maintenance and optimization of the communication base station antenna, and high efficiency and accuracy of the communication network quality can be ensured only by carrying out work such as network planning and optimization on the basis of integrated and reliable project parameter data of the antenna.

The project parameter of the antenna mainly includes an azimuth angle, a pitch angle, a roll angle, a height, a physical position and the like. The azimuth angle is usually increased clockwise by taking the true north as 0 degree and taking the true south as 180 degrees. The azimuth angle of the antenna is determined by a position of the antenna, and an accurate azimuth angle can ensure that an actual coverage of a base station is as expected and further ensure operation quality of the network. The azimuth angle of the antenna can be properly adjusted so as to better optimize a conventional communication network according to traffic or a specific condition of the network. The pitch angle includes a depression angle (i.e. downward inclination angle) and an elevation angle (i.e. upward inclination angle), and the pitch angle of an antenna usually refers to a downward inclination angle of the antenna. The selection of a proper pitch angle may minimize energy superposition between electromagnetic wave existing between the antenna and a coverage boundary of the antenna and electromagnetic wave existing in the coverage of another antenna, thereby minimizing signal interference between neighbour areas. An excessively small pitch angle may lead to signal cross coverage between the neighbour areas, neighbour switching relation clutter and serious signal interference in a system. While an excessively large pitch angle may cause formation of a blind or weak signal area in the coverage, and simultaneously cause deformation in a shape of an antenna pattern to result in serious intra-system interference. The roll angle is one of necessary parameters for describing a space attitude of an object. The roll angle of the antenna is not included in a conventional antenna project parameter under normal circumstances, which is caused by a limitation of a conventional testing means and inattention to its importance. When the base station antenna is mounted, it is substantially necessary to ensure that a longitudinal section passing through a centre of the antenna is perpendicular to the ground, and then the roll angle of the antenna is zero. In fact, due to a limitation of a mounting level and the action of external force in a later period, a considerable proportion of roll angles of antennae have a great offset relative to zero. A relatively large non-zero roll angle may cause the great deviation of a radio wave range in the direction to be covered from an expected range, which results in the inaccuracy of related planning optimization. For example, when the antenna is laterally inclined, that is, the inclination angle and the longitudinal section of the antenna are not on the same plane, it is necessary to add the roll angle for the description of a space attitude of the antenna and the accurate calculation of a specific coverage condition of radio waves. Antenna attitude measurement refers to the accurate measurement of the attitude project parameter data of the antenna for providing a reliable foundation for the construction of the network.

Conventional antenna attitude measurement is implemented by the manual measurement of an engineer with multiple tools. Azimuth angles of most of angles are manually determined by virtue of a compass. A line of magnetic force of the earth is poorer in consistency, so that the compass is easily restricted by a natural condition, and thus cannot provide consistent direction measurement. Factors such as a magnetic declination of probably 0 to 20 degrees of a certain point on the earth, possible influence of a geomagnetic storm on a geomagnetic index and non-uniform distribution of minerals on the earth may cause a change in north pole. Generally, the consistency of a direction of a line of magnetic force within a range of only several kilometres can be ensured in an ordinary place on the earth. What is worse, along with the introduction of a great number of electric appliances, buildings, automobiles and steel into a city, the small-area magnetic field change is more difficult to compensate. The daily transmission of dozens of watts of electromagnetic waves by the antenna of the base station, the high-density welding of a great amount of steel of a tower of the base station, absence of a regular and accurate compensation method for a proximal magnetic field and the like are all factors causing incapability in the accurate measurement of the azimuth angle. The pitch angle of the antenna is determined by a method of inspecting a low-accuracy scale mark made on an antenna mounting frame by the engineer, and different engineers may have different working skills and adopt different measurement methods, so that a greater error in a measurement result may be caused, and a requirement of accurate design cannot be met.

The document EP 2 498 050 A2 discloses an attitude measurement sensor which is suitable for an antenna, comprising a sun position sensor, a Global Positioning System (GPS) module, a central processing unit and an output module, wherein the central processing unit is connected with the sun position sensor, the GPS module and the output module. Furthermore, the sensor can be refined by adding inclinometers for correcting the attitude output in cases where the sensor is not horizontal.

The document US 2009/040106 A1 discloses an antenna comprising a peripheral unit having an attitude measurement sensor, wherein the sensor comprises: a sun position sensor, a Global Positioning System (GPS) module, inclinometers, a central processing unit, a power module and an output module, wherein the central processing unit and the power module are connected with the sun position sensor, the GPS module, the inclinometers and the output module. The document mentions moreover a method for determining an orientation of the antenna using the aforementioned sensors.

The document KR 2010 0010233 A discloses a method using an attitude measuring sensor mounted to an antenna, the sensor comprising a digital electromagnetic compass, a GPS receiver and a tilt sensor all linked to a CPU, wherein the method uses the sensors in cooperation with the CPU to determine azimuth, tilt angle and location of the antenna.

The document JP 2012 088073 A discloses an attitude measurement sensor which would be suitable for an antenna, comprising a sun position sensor, a terrestrial radio-based positioning system and a timing module, a three-axis gravity acceleration sensor, a central processing unit, a storage module and an output module, wherein the central processing unit is connected with the sun position sensor, the acceleration sensor and the modules mentioned before.

**Summary**

The technical problem to be solved by the present invention is to provide a sensor free from magnetic interference and capable of accurately measuring various project parameter data of an antenna and to provide an antenna attitude measurement method based on the antenna attitude measurement sensor.

In order to solve the technical problem, the technical solutions of the present invention are as follows.

An antenna attitude measurement method, according to claim 1, is provided, wherein the method is based on an antenna attitude measurement sensor, the antenna attitude measurement sensor comprising a shell, and a sun position sensor, a three-axis gravity acceleration sensor, a Global Positioning System (GPS) module, a central processing unit, a power module and a storage and output module, which are arranged in the shell, wherein an input end of the central processing unit is connected with output ends of the sun position sensor, the three-axis gravity acceleration sensor and the GPS module respectively, and an output end of the central processing unit is connected with the storage and output module, wherein the power module is connected with the sun position sensor, the three-axis gravity acceleration sensor, the GPS module, the central processing unit and the storage and output module respectively, and wherein a three-axis coordinate system of the sun position sensor forms a translation relationship with a three-axis coordinate system of the three-axis gravity acceleration sensor, the method comprising:

a: stably mounting the antenna attitude measurement sensor on a measured antenna to enable a three-axis coordinate system of the antenna attitude measurement sensor to be parallel to a three-axis coordinate system of the antenna;

b: acquiring, by the GPS module, a geographical position and height of the antenna and standard time at a corresponding azimuth angle; obtaining, by the three-axis gravity acceleration sensor, a pitch angle $\gamma$ and a roll angle $\Theta$ of the antenna; and acquiring, by the sun position sensor, an azimuth angle $\phi$ of incident sunlight on a reference surface of the antenna relative to the sun position sensor;

c: deducing a vertical incident angle $\alpha$ and a horizontal incident angle $\beta$ of the sunlight relative to a local geographical reference surface in combination with sun orbit information according to the geographical position of the antenna and the standard time, which are acquired by the GPS module in the antenna attitude measurement sensor;

d: calculating an azimuth angle $\delta$ of the antenna according to data obtained in steps b and c by virtue of a formula as follows:

$$\tan (\phi - \theta) = \sin (\beta - \delta)/(\sin \gamma \tan \alpha + \cos \gamma \cos (\beta - \delta)) \, ;$$

and

e: repeating steps b to d, and measuring, storing and outputting multiple sets of antenna project parameter data optimization results, wherein the project parameter data include an azimuth angle, a pitch angle, a roll angle, a height and a physical position of the antenna.

By the present invention, the following technical progresses are made.

The sunlight is combined with the other attitude measurement information of the antenna to realize the measurement of a direction of the antenna, so that orientation inaccuracy caused by magnetic interference during conventional magnetic orientation is avoided, the accuracy of the project parameter measurement data of the antenna is ensured, and a reliable foundation is provided for the construction, maintenance and optimization of the communication base station antenna. The sun position sensor, the three-axis gravity acceleration sensor and the GPS module in the antenna attitude measurement sensor work under the coordination of the central processing unit, and the central processing unit comprehensively analyzes and calculating the acquired information in combination with the sun orbit information by virtue of a timing function of the GPS module, thereby obtaining each project parameter of the antenna. Manual operation in measurement only includes the fixation of the attitude measurement sensor on the antenna with a space attitude the same as that of the antenna, so that the project parameters of the antenna can be measured by one piece of equipment and one operation, and working efficiency and accuracy are greatly improved.

## Brief description of the drawings

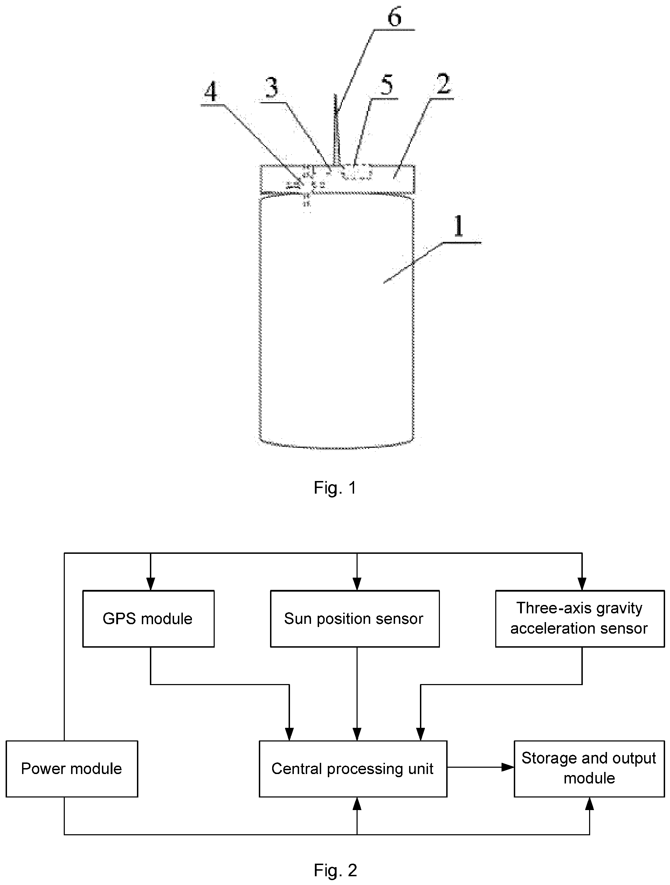

Fig. 1 is a mounting diagram of an antenna attitude measurement sensor, used in the method according to the present invention;
Fig. 2 is a structure diagram of an antenna attitude measurement sensor; and

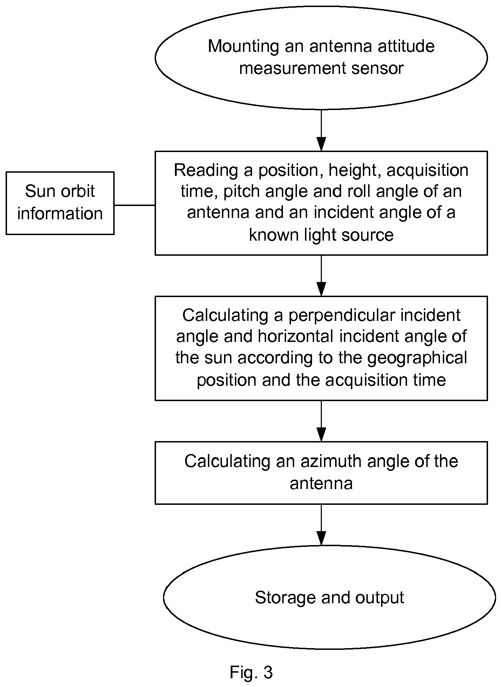

Fig. 3 is a flowchart of an antenna attitude measurement method according to the present invention.

List of reference signs:

1. measured antenna; 2. shell; 3. sun position sensor; 4. three-axis gravity acceleration sensor; 5. GPS module; and 6. style.

## Detailed description of the embodiments

The present invention is further described below with reference to the drawings in detail.

An antenna attitude measurement sensor mainly includes a shell 2, and a sun position sensor 3, a three-axis gravity acceleration sensor 4, a GPS module 5, a central processing unit, a power module and a storage and output module, which are arranged in the shell, wherein an input end of the central processing unit is connected with output ends of the sun position sensor, the three-axis gravity acceleration sensor and the GPS module respectively, and an output end of the central processing unit is connected with the storage and output module; and the power module is connected with the sun position sensor, the three-axis gravity acceleration sensor, the GPS module, the central processing unit and the storage and output module respectively. In the present invention, a horizontal plane of the sun position sensor is parallel to a horizontal plane of the three-axis gravity acceleration sensor, and an initial 0-degree angle of the three-axis gravity acceleration sensor is consistent with a 0-degree angle of the sun position sensor, that is, a three-axis coordinate system of the sun position sensor forms a translation relationship with a three-axis coordinate system of the three-axis gravity acceleration sensor.

Wherein, the sun position sensor includes a dial surface, a style 6 and a style shadow angle sensor, and when the sun shines on a sundial at a certain moment in a certain day, a projection angle of the style on the dial surface can be determined by the style shadow angle sensor on the dial surface. Of course, another form may also be adopted for the sun position sensor, for example, the projection angle of the style on the dial surface is determined by taking a photo for image processing by a camera, thereby obtaining an incident azimuth angle $\Phi$ of the sun relative to the dial surface.

An antenna attitude measurement method wherein the antenna attitude measurement method is based on an antenna attitude measurement sensor, and includes:

a: an antenna attitude measurement sensor is mounted on a measured antenna through a fixture, for example, the antenna attitude measurement sensor is mounted at a top end of the antenna in a way that the measured antenna is close to the antenna attitude measurement sensor as much as possible and a three-axis coordinate system of the antenna attitude measurement sensor to be parallel to a three-axis coordinate system of the antenna;

b: a central processing unit acquires a geographical position and height of the antenna and standard time at a corresponding azimuth angle through a GPS module; obtaining, by the three-axis gravity acceleration sensor, a pitch angle $\gamma$ and roll angle $\Theta$ of the antenna; and acquiring, by the sun position sensor, an azimuth angle $\Phi$ of incident sunlight on a reference surface of an attitude of the antenna relative to the sun position sensor, wherein the GPS module synchronously records current standard time when the sun position sensor reads the incident azimuth angle of the sunlight, and the incident azimuth angle of the sunlight refers to an azimuth of a projection of the style of the sun position sensor on the dial surface when the sunlight shines the dial surface of the sun position sensor;

c: the central processing unit deduces a perpendicular incident angle $\alpha$ and a horizontal incident angle $\beta$ of the sun relative to a local geographical reference surface in combination with current local sun orbit information according to the geographical position of the antenna and the standard time, which are acquired by the GPS module. the angle $\alpha$ and angle $\beta$ do not have to be calculated by the local central processing unit, but to transfer by the transmission unit to the central processing unit for computing process.

d: the central processing unit calculates an azimuth angle $\delta$ of the antenna according to data obtained in b and c by virtue of a formula as follows:

$$\tan(\phi - \theta) = \frac{\sin(\beta - \delta)}{\sin \gamma \tan \alpha + \cos \gamma \cos(\beta - \delta)},$$

and

e: repeating b to d, multiple sets of antenna project parameters are measured, and the central processing unit performs numerical value optimization calculation on acquired multiple sets of data at a certain time interval.

Of course, in step a in the present invention, the three-axis coordinate system of the antenna attitude measurement sensor may not be parallel to the three-axis coordinate system of the antenna, that is, a fixed offset angle can be kept (the offset angle is obtained after spatial rotation about an origin of the three-axis coordinate system), and the offset angle is eliminated (i.e. reverse rotation by the same angle) is eliminated from a final result to obtain a basic project parameter of the antenna.

If there is no sunlight in an antenna attitude measurement process, the direction of the antenna can be measured by adopting a manually arranged light source at a known position instead of the sun. When the light source at the known position is used, if an angle cannot be formed above the sundial, the azimuth of the antenna can be measured by placing the light source at the known position below the sundial and inverting the sundial. When an artificial light source at a known fixed position is used, the synchronous timing of the GPS module may not be required during the angle acquisition of the sun position sensor.

The present invention can be applied to one-time project measurement, or can be placed on the antenna for the real-time monitoring of the attitude of the antenna for a long time. Under the condition that the present invention is placed on the antenna for a long time or an original position of a base position has been relatively accurate, a clock module can be adopted instead of the GPS module, and only a synchronization function of the clock module is used for synchronously recording formation time of a specific angle on the sundial.

**Claims**

1. n antenna attitude measurement method, wherein the method is based on an antenna attitude measurement sensor, the antenna attitude measurement sensor comprising a shell (2), and a sun position sensor (3), a three-axis gravity acceleration sensor (4), a Global Positioning System (GPS) module (5), a central processing unit, a power module and a storage and output module, which are arranged in the shell (2), wherein an input end of the central processing unit is connected with output ends of the sun position sensor (3), the three-axis gravity acceleration sensor (4) and the GPS module (5) respectively, and an output end of the central processing unit is connected with the storage and output module, wherein the power module is connected with the sun position sensor (3), the three-axis gravity acceleration sensor (4), the GPS module (5), the central processing unit and the storage and output module respectively, and wherein a three-axis coordinate system of the sun position sensor (3) forms a translation relationship with a three-axis coordinate system of the three-axis gravity acceleration sensor (4), the method comprising: f

   a. stably mounting the antenna attitude measurement sensor on a measured antenna (1) to enable a three-axis coordinate system of the antenna attitude measurement sensor to be parallel to a three-axis coordinate system of the antenna (1);

b. acquiring, by the GPS module (5), a geographical position and height of the antenna (1) and standard time at a corresponding azimuth angle, obtaining, by the three-axis gravity acceleration sensor (4), a pitch angle $\gamma$ and a roll angle $\theta$ of the antenna (1) and acquiring, by the sun position sensor (2), an azimuth angle $\phi$ of incident sunlight on a reference surface of the antenna (1) relative to the sun position sensor (2);

c. deducing a vertical incident angle $\alpha$ and a horizontal incident angle $\beta$ of the sunlight relative to a local geographical reference surface in combination with sun orbit information according to the geographical position of the antenna (1) and the standard time, which are acquired by the GPS module (5) in the antenna attitude measurement sensor;

d. calculating an azimuth angle $\delta$ of the antenna (1) according to data obtained in steps b and c by virtue of a formula as follows: tan $(\phi - \theta)$ = sin $(\beta - \delta)/(\sin \gamma \tan \alpha + \cos \gamma \cos (\beta - \delta))$ ; and

e. repeating steps b to d, and measuring, storing and outputting multiple sets of antenna project parameter data optimization results, wherein the project parameter data include an azimuth angle, a pitch angle, a roll angle, a height and a physical position of the antenna (1).

**Patentansprüche**

1. Antennenlagemessverfahren, wobei das Verfahren auf einem Antennenlagemesssensor basiert, wobei der Antennenlagemesssensor ein Gehäuse (2) und einen Sonnenpositionssensor (3), einen Dreiachsen-Schwerkraft-Beschleunigungssensor (4), ein Global-Positioning-System(GPS)-Modul (5), eine zentrale Verarbeitungseinheit, ein Strommodul und ein Speicher- und Ausgabemodul, die in dem Gehäuse (2) angeordnet sind, umfasst, wobei ein Eingangsende der zentralen Verarbeitungseinheit mit Ausgangsenden jeweils des Sonnenpositionssensors (3), des Dreiachsen-Schwerkraft-Beschleunigungssensors (4) und des GPS-Moduls (5) verbunden ist und ein Ausgangsende der zentralen Verarbeitungseinheit mit dem Speicher- und Ausgabemodul verbunden ist, wobei das Strommodul jeweils mit dem Sonnenpositionssensor (3), dem Dreiachsen-Schwerkraft-Beschleunigungssensor (4), dem GPS-Modul (5), der zentralen Verarbeitungseinheit und dem Speicher- und Ausgabemodul verbunden ist und wobei ein Dreiachsen-Koordinatensystem des Sonnenpositionssensors (3) eine Translationsbeziehung mit einem Dreiachsen-Koordinatensystem des Dreiachsen-Schwerkraft-Beschleunigungssensors (4) ausbildet, wobei das Verfahren Folgendes umfasst:

a. stabiles Montieren des Antennenlagemesssensors an einer gemessenen Antenne (1), damit ein Dreiachsen-Koordinatensystem des Antennenlagemesssensors zu einem Dreiachsen-Koordinatensystem der Antenne (1) parallel stehen kann;

b. Erfassen, durch das GPS-Modul (5), einer geographischen Position und Höhe der Antenne (1) und von Normalzeit bei einem entsprechenden Azimutwinkel, Erhalten, durch den Dreiachsen-Schwerkraft-Beschleunigungssensor (4), eines Nickwinkels $\gamma$ und eines Rollwinkels $\theta$ der Antenne (1) und Erfassen, durch den Sonnenpositionssensor (2), eines Azimutwinkels $\phi$ des einfallenden Sonnenlichts auf eine Referenzoberfläche der Antenne (1) relativ zu dem Sonnenpositionssensor (2);

c. Ableiten eines vertikalen Einfallswinkels $\alpha$ und eines horizontalen Einfallswinkels $\beta$ des Sonnenlichts relativ zu einer lokalen geographischen Referenzoberfläche in Kombination mit Sonnenumlaufinformationen gemäß der geographischen Position der Antenne (1) und der Normalzeit, die durch das GPS-Modul (5) in dem Antennenlagemesssensor erfasst werden;

d. Berechnen eines Azimutwinkels $\delta$ der Antenne (1) gemäß Daten, die in Schritten b und c erhalten wurden, vermittels einer Formel wie folgt:

$$\tan(\phi - \theta) = \sin(\beta - \delta)\,/(\sin\gamma \tan\alpha + \cos\gamma \cos(\beta - \delta));$$

und

e. Wiederholen der Schritte b bis d und Messen, Speichern und Ausgeben mehrerer Sätze von Antennenprojektparameterdatenoptimierungsergebnissen, wobei die Projektparameterdaten einen Azimutwinkel, einen Nickwinkel, einen Rollwinkel, eine Höhe und eine physische Position der Antenne (1) beinhalten.

**Revendications**

1. Procédé de mesure d'attitude d'antenne, dans lequel le procédé est basé sur un capteur de mesure d'attitude d'antenne, le capteur de mesure d'attitude d'antenne comprenant une coque (2) et un capteur de position du soleil (3), un capteur d'accélération gravitationnelle à trois axes (4), un module de système mondial de positionnement (GPS) (5), une unité centrale de traitement, un module d'alimentation et un module de stockage et de sortie, qui sont agencés dans la coque (2), dans lequel une extrémité d'entrée de l'unité centrale de traitement est raccordée à des extrémités de sortie du capteur de position du soleil (3), du capteur d'accélération gravitationnelle à trois axes (4) et du module de système GPS (5), respectivement, et une extrémité de sortie de l'unité centrale de traitement est raccordée au module de stockage et de sortie, dans lequel le module d'alimentation est raccordé au capteur de position du soleil (3), au capteur d'accélération gravitationnelle à trois axes (4), au module de système GPS (5), à l'unité centrale de traitement et au module de stockage et de sortie, respectivement, et dans lequel un système de coordonnées à trois axes du capteur de position du soleil (3) forme une relation de translation avec un système de coordonnées à trois axes du capteur d'accélération gravitationnelle à trois axes (4), le procédé consistant :

a. à monter de manière stable le capteur de mesure d'attitude d'antenne sur une antenne mesurée (1) pour permettre à un système de coordonnées à trois axes du capteur de mesure d'attitude d'antenne d'être parallèle à un système de coordonnées à trois axes de l'antenne (1) ;

b. à acquérir, au moyen du module de système GPS (5), une position géographique et une hauteur de l'antenne (1) et un temps légal selon un angle d'azimut correspondant, à obtenir, au moyen du capteur d'accélération gravitationnelle à trois axes (4), un angle de pas $\gamma$ et un angle de roulis $\theta$ de l'antenne (1) et à acquérir, au moyen du capteur de position du soleil (2), un angle d'azimut $\phi$ de la lumière incidente du soleil sur une surface de référence de l'antenne (1) par rapport au capteur de position du soleil (2) ;

c. à déduire un angle incident vertical $\alpha$ et un angle incident horizontal $\beta$ de la lumière du soleil par rapport à une surface de référence géographique locale en combinaison avec des informations d'orbite du soleil en fonction de la position géographique de l'antenne (1) et du temps légal, qui sont acquis par le module de système GPS (5) dans le capteur de mesure d'attitude d'antenne ;

d. à calculer un angle d'azimut $\delta$ de l'antenne (1) en fonction de données obtenues aux étapes b et c en vertu d'une formule suivante : $\tan(\phi - \theta) = \sin(\beta - \delta)/(\sin \gamma \tan \alpha + \cos \gamma \cos (\beta - \delta))$ ; et

e. à répéter les étapes b à d et à mesurer, à stocker et à délivrer en sortie de multiples ensembles de résultats d'optimisation de données de paramètre de projet d'antenne, dans lequel les données de paramètre de projet comprennent un angle d'azimut, un angle de pas, un angle de roulis, une hauteur et une position physique de l'antenne (1).

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2498050 A2
- US 2009040106 A1
- KR 20100010233 A
- JP 2012088073 A